# FASCICULE DE BREVET EUROPEEN

(11) **EP 1 967 932 B1**
(45) Date de publication et mention de la délivrance du brevet: **07.04.2010**
(21) Numéro de dépôt: 07004835.0
(22) Date de dépôt: 08.03.2007
(51) Int. Cl.: G05D 11/03, G05D 9/02

(54) **Dispositif de régulation de la concentration d'un produit dans un liquide**
Vorrichtung zur Regelung der Konzentration einer Komponente in einer Flüssigkeit
Device for regulating the concentration of a component in a liquid

(43) Date de publication de la demande: 10.09.2008
(73) Titulaire: SPECIAL COATING LABORATORY INTERNATIONAL (S.C.L. INTERNATIONAL), 74160 Archamps (FR)
(72) Inventeur: Gehrig, Jean, 74580 Viry (FR); Gehrig, Denis, 74160 Saint-Julien (FR)
(74) Mandataire: Verriest, Philippe

(56) Documents cités:
- EP-A- 1 434 254
- DE-A1- 4 424 691
- FR-A- 2 565 373
- US-A- 3 572 649

## Description

La présente invention a pour objet un dispositif de régulation de la concentration d'un produit dans un liquide et plus particulièrement d'un alcool entrant dans la composition d'un vernis contenu dans une cuve de vernissage pour verres optiques ou autres substrats.

Le document EP 1 434 254 décrit une cuve utilisée dans un appareil employé dans un procédé d'anodisation, tandis que le document US 3 572 649 décrit un appareil pour rajouter de manière précise un liquide dans un système d'écoulement.

Dans les cuves contenant un vernis pour le vernissage des verres optiques ou autres substrats le vernis est au contact de l'air ambiant et l'alcool qu'il contient s'évapore ce qui nécessite de rajouter de l'alcool régulièrement pour maintenir la bonne concentration en alcool dans le vernis. Actuellement, l'ajout d'alcool est réalisé manuellement mais cette opération doit être effectuée régulièrement et il arrive fréquemment que l'opérateur oublie. En outre cette opération a des effets néfastes sur la santé de l'opérateur. Enfin cette intervention manuelle se traduit souvent par des erreurs de dosage de l'alcool préjudiciables à la qualité du vernissage des verres optiques. La régulation peut être effectuée également au moyen d'un système de régulation électronique utilisant des capteurs de niveau haut et bas, toutefois le coût d'une telle régulation électronique est important et renchérit fortement le prix de la cuve de vernis.

La présente invention a pour but de remédier à ces inconvénients en proposant un dispositif de régulation de la concentration d'alcool dans une cuve de vernis pour verres optiques ou autres substrats évitant le contrôle et l'ajout manuel d'alcool et présentant un coût de fabrication peu élevé.

Le dispositif de régulation de la concentration d'un alcool dans une cuve de vernis selon la présente invention comprend un bac de trop plein solidarisé à la face externe de ladite cuve et connecté d'une part via un premier conduit à la cuve de vernis par l'intermédiaire d'une pompe fonctionnant en continu et d'autre part via un deuxième conduit à un réservoir d'alcool fermé situé à une hauteur supérieure à celle du bac de trop plein en sorte que lorsque le niveau du vernis dans le bac de trop plein baisse par évaporation de l'alcool contenu dans ledit vernis sous le niveau du point de jonction entre le deuxième conduit et le bac de trop plein une bulle d'air se forme et remonte ledit deuxième conduit jusqu'au réservoir d'alcool ce qui a pour effet de créer une surpression dans le réservoir d'alcool et de libérer une goutte d'alcool dans le bac de trop plein ceci jusqu'à ce que le niveau de vernis dans le bac de trop plein retrouve son niveau normal au dessus du point de jonction entre le bac de trop plein et le deuxième conduit maintenant ainsi la concentration désirée en alcool dans le vernis.

Conformément à la présente invention le deuxième conduit reliant le bac de trop plein au réservoir d'alcool se présentera sous la forme d'un tube souple et sera connecté audit bac par l'intermédiaire d'un tube rigide s'étendant sensiblement parallèlement à la surface horizontale du vernis contenu dans la goulotte. Le tube rigide sera de préférence légèrement incliné vers le haut de manière à permettre une remontée efficace des bulles d'air depuis l'entrée dudit tube jusque dans le réservoir d'alcool.

Les avantages et les caractéristiques de la présente invention ressortiront plus clairement de la description qui suit et qui se rapportent au dessin annexé, lequel en représente un mode de réalisation non limitatif.
- la figure 1 représente une vue schématique du dispositif de régulation de la concentration en alcool dans une cuve de vernis selon la présente invention selon une coupe transversale
- la figure 2 représente une vue de détail selon une coupe transversale du bac de trop plein et de sa connexion au conduit d'alimentation en alcool avec un niveau haut du vernis dans le bac de trop plein.
- la figure 3 représente une vue de détail du bac de trop plein et de sa connexion au conduit d'alimentation en alcool avec un niveau bas du vernis dans le bac de trop plein du à l'évaporation de l'alcool contenu dans le vernis

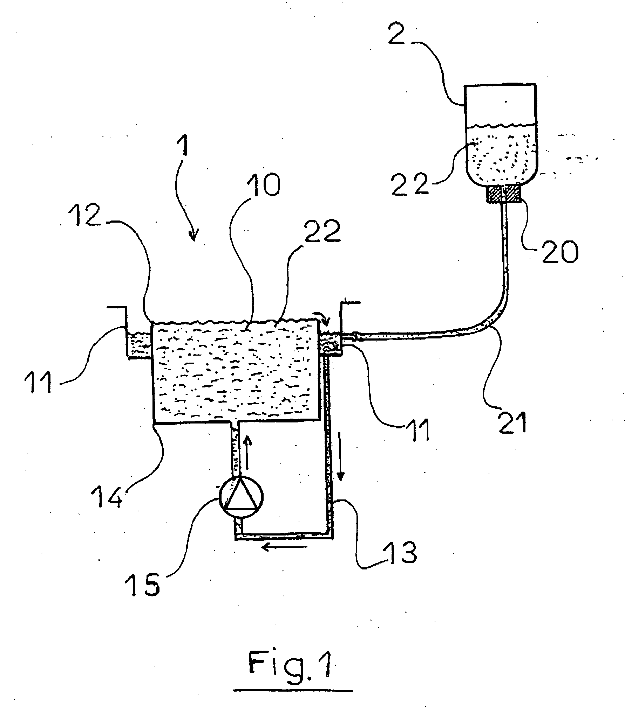

Si on se réfère à la figure 1 on peut voir une cuve 1 remplie d'un vernis 10 pour verres optiques ou autres substrats non représentés, un bac 11 de trop plein de section transversale en U solidarisé à la face externe de la cuve 1 sous son bord supérieur 12, un conduit 13 qui relie le fond du bac 11 au fond 14 de la cuve 1 par l'intermédiaire d'une pompe 15 et une bouteille d'alcool 2 orientée vers le bas et située à une hauteur supérieure à celle du bac 11 à laquelle elle est connectée par son goulot d'entrée 20 via un tube souple 21.

La cuve 1 communique par trop plein avec le bac 11 et la pompe 15 fonctionne en continu de manière à maintenir en permanence un niveau haut du vernis 10 dans la cuve 1 et dans le bac 11. La baisse du niveau dans la cuve 1 et plus particulièrement dans le bac 11 est due essentiellement à l'évaporation de l'alcool 22 contenu dans le vernis 10 ce qui entraîne une variation importante ne garantissant plus un résultat efficace du vernissage des verres ou autres substrats.

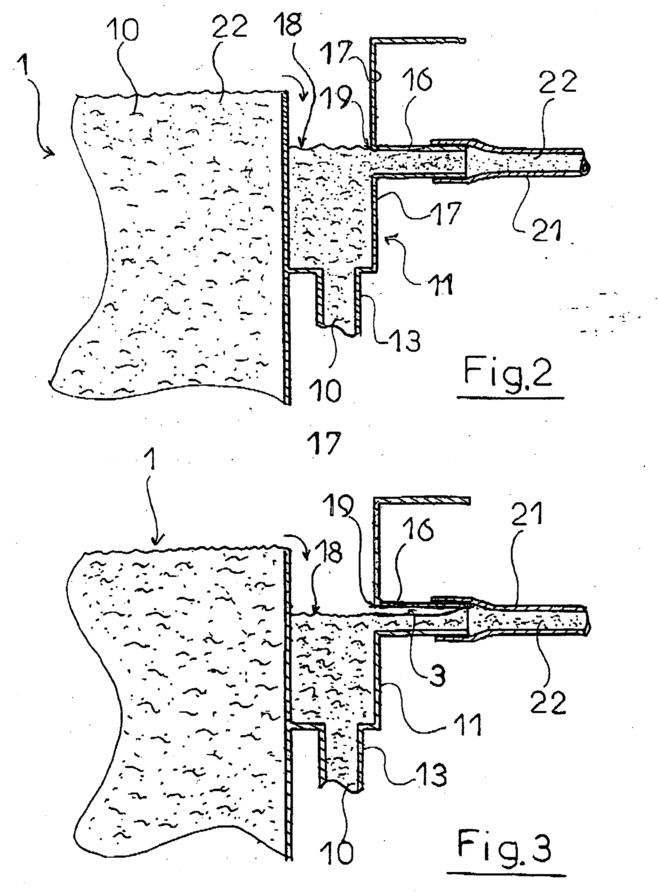

Si on se réfère à la figure 2 on peut voir que le bac 11 comprend un tube rigide 16 réalisé à l'instar du bac 11 à partir d'une matière métallique inoxydable et qui s'étend parallèlement à la surface du vernis 10 contenu dans le bac 11 et perpendiculairement à la paroi externe verticale 17 de ce dernier. La connexion du conduit souple 21 acheminant l'alcool avec le tube métallique 16 est réalisée en emmanchant l'une des extrémités du conduit souple 21 sur l'extrémité libre du tube métallique 16.

Une baisse du niveau 18 du vernis 10 dans le trop plein 11, due à l'évaporation de l'alcool contenu dans le vernis 10, sous le point de jonction 19 du tube 16 avec la paroi verticale 17 du bac 11, comme on peut le voir sur la figure 3, a pour effet de créer une bulle d'air 3 dans le tube métallique 16 qui va remonter le conduit souple 21 jusque dans la bouteille d'alcool 2 fermée et générer une surpression dans son volume d'air intérieur ayant pour effet de libérer une goutte d'alcool dans le vernis 10 contenu dans le bac 11. Le processus se poursuivra jusqu'à ce que le niveau 18 du vernis 10 dans le bac 11 retrouve son niveau normal au-dessus du point de jonction 19 entre le tube 16 et le bac 11 comme on peut le voir sur la figure 2.

La régulation de la concentration d'alcool dans le vernis 10 est donc réalisée automatiquement et naturellement grâce à un apport en alcool provenant de la bouteille d'alcool 2 dès que le niveau de vernis 10 dans le bac 11 descend en dessous du niveau défini par le point de jonction 19 entre le tube 16 et la paroi vertical 17 du bac 11 et ceci sans aucune intervention manuelle extérieure.

Le tube 16 métallique du bac de trop plein présentera de préférence une section comprise entre 6 et 8 mm et sera chanfreiné au niveau de sa jonction avec la paroi intérieure du bac pour une meilleure pénétration de la bulle d'air. D'autre part le tube 16 métallique pourra être légèrement incliné vers le haut pour permettre une meilleure remontée de la bulle d'air dans le tube et dans le conduit souple connecté à la bouteille d'alcool.

On notera que le dispositif de régulation selon la présente invention pourra être utilisé pour d'autres liquides tels que par exemple des détergents (eau + savon) sans pour autant sortir du cadre de la présente invention.

## Revendications

1. Dispositif de régulation de la concentration d'un produit dans un liquide et plus particulièrement d'un alcool (22) entrant dans la composition d'un vernis (10) contenu dans une cuve de vernissage (1) pour verres optiques ou autres substrats le dispositif comprenant un bac (11) de trop plein solidarisé à la face externe de ladite cuve (1) et connecté d'une part via un premier conduit (13) à la cuve (1) de vernis (10) par l'intermédiaire d'une pompe (15) fonctionnant en continu **caractérisé en ce que** le bloc de trop plein est d'autre part connecté via un deuxième conduit (21) à un réservoir d'alcool (2) fermé situé à une hauteur supérieure à celle du bac (11) de trop plein en sorte que lorsque le niveau (18) du vernis (10) dans le bac (11) de trop plein baisse par évaporation de l'alcool contenu dans ledit vernis (10) sous le niveau du point de jonction (19) entre le deuxième conduit (21) et le bac (11) de trop plein une bulle d'air (3) se forme et remonte ledit deuxième conduit (21) jusqu'au réservoir d'alcool (2) ce qui a pour effet de créer une surpression dans le réservoir d'alcool (2) et de libérer une goutte d'alcool dans le bac (11) de trop plein ceci jusqu'à ce que le niveau (18) de vernis (10) dans le bac (11) de trop plein retrouve son niveau (18) normal au-dessus du point de jonction (19) entre le bac (11) de trop plein et le deuxième conduit (21).

2. Dispositif de régulation selon la revendication 1 **caractérisé en ce que** le deuxième conduit (21) reliant le bac (11) de trop plein au réservoir d'alcool (2) est un tube souple connecté audit bac par l'intermédiaire d'un tube rigide (16) s'étendant sensiblement parallèlement à la surface horizontale du vernis (10) contenu dans le bac (11).

3. Dispositif de régulation selon la revendication 2 **caractérisé en ce que** le tube (16) est incliné vers le haut de manière à permettre une remontée plus efficace des bulles d'air (3) depuis l'entrée du tube (16) jusque dans le réservoir d'alcool (2).

4. Dispositif de régulation selon l'une quelconque des revendications 2 ou 3 **caractérisé en ce que** le bac (11) de trop plein et le tube (16) sont réalisés à partir d'une matière métallique inoxydable.

5. Dispositif de régulation selon l'une quelconque des revendications 2 à 4 **caractérisé en ce que** le diamètre interne du tube rigide (16) du bac (11) de trop plein est compris entre 6 et 8 millimètres.

6. Dispositif selon l'une quelconque des revendications 2 à 5 **caractérisé en ce que** le tube rigide (16) du bac (11) de trop plein est chanfreiné au niveau de sa jonction avec la paroi intérieure du bac (11) de trop plein pour une meilleure pénétration des bulles d'air dans ledit tube (16).

7. Dispositif selon l'une quelconque des revendications précédentes **caractérisé en ce que** le réservoir d'alcool (2) se présente sous la forme d'une bouteille orientée vers le bas et connectée à l'une des extrémités du deuxième conduit (21) par son goulot d'entrée (20).

8. Dispositif selon l'une quelconque des revendications précédentes **caractérisé en ce que** le bac (11) de trop plein présente une section transversale en U.

## Claims

1. Device for regulating the concentration of a product in a liquid and more particularly that of an alcohol (22) forming part of the composition of a coating material (10) contained in a coating tank (1) for coating optical lenses or other substrates, the device comprising an overflow container (11) fastened to the external face of said tank (1) and connected, on the one hand, via a first pipe (13) to the tank (1) of coating material (10) by means of a continuously operating pump, **characterized in that** the overflow container is, on the other hand, connected via a second pipe (21) to a closed alcohol reservoir (2) located at a height above that of the overflow container (11) so that, when the level (18) of the coating material (10) in the overflow container (11) drops by evaporation of the alcohol contained in said coating material (10) below the level of the junction point (19) where the second pipe (21) joins the overflow container (11), an air bubble (3) forms and rises back up said second pipe (21) as far as the alcohol reservoir (2), the effect of which is to create an overpressure in the alcohol reservoir (2) and to release a drop of alcohol in the overflow container (11) until the level (18) of the coating material (10) in the overflow container (11) resumes its normal level (18) above the junction point (19) between the overflow container (11) and the second pipe (21).

2. Regulating device according to Claim 1, **characterized in that** the second point (21) joining the overflow container (11) to the alcohol reservoir (2) is a flexible tube connected to said container via a rigid tube (16) extending approximately parallel to the horizontal surface of the coating material (10) contained in the container (11).

3. Regulating device according to Claim 2, **characterized in that** the tube (16) is inclined upwards so as to allow the air bubbles (3) to rise more effectively from the inlet of the tube (16) right into the alcohol reservoir (2).

4. Regulating device according to either of Claims 2 and 3, **characterized in that** the overflow container (11) and the tube (16) are made of a non-oxidizable metallic material.

5. Regulating device according to any one of Claims 2 to 4, **characterized in that** the inside diameter of the rigid tube (16) of the overflow container (11) is between 6 and 8 millimetres.

6. Device according to any one of Claims 2 to 5, **characterized in that** the rigid tube (16) of the overlow container (11) is bevelled at its junction with the inner wall of the overflow container (11) for better penetration of the air bubbles into said tube (16) .

7. Device according to any one of the preceding claims, **characterized in that** the alcohol reservoir (2) takes the form of a downwardly directed bottle connected to one of the ends of the second pipe (21) via its neck (20).

8. Device according to any one of the preceding claims, **characterized in that** the overflow container (11) has a U-shaped cross section.

## Patentansprüche

1. Vorrichtung zum Einstellen der Konzentration eines Produkts in einer Flüssigkeit und insbesondere eines Alkohols (22), der der Zusammensetzung eines Lacks (10), der in einem Lackierbehälter (1) für optische Gläser oder andere Substrate enthalten ist, zugeführt wird, wobei die Vorrichtung einen Überlaufkasten (11) aufweist, der mit der Außenfläche des Behälters (1) fest verbunden ist und einerseits über eine erste Leitung (13) mit dem Behälter (1) für Lack (10) über eine Pumpe (15), die kontinuierlich arbeitet, verbunden ist, **dadurch gekennzeichnet, dass** der Überlaufkasten andererseits über eine zweite Leitung (21) mit einem geschlossenen Alkoholvorratsbehälter (2) verbunden ist, der sich auf einer Höhe oberhalb jener des Überlaufkastens (11) befindet, derart, dass sich dann, wenn der Pegel (18) des Lacks (10) im Überlaufkasten (11) durch Verdampfung von in dem Lack (10) enthaltenem Alkohol unter den Pegel des Verbindungspunkts (19) zwischen der zweiten Leitung (21) und dem Überlaufkasten (11) sinkt, eine Luftblase (3) bildet und längs der zweiten Leitung (21) bis zum Alkoholvorratsbehälter (2) aufsteigt, was die Wirkung hat, dass in dem Alkoholvorratsbehälter (2) ein Überdruck erzeugt wird und ein Alkoholtropfen in den Überlaufkasten (11) freigegeben wird, bis der Pegel (18) des Lacks (10) im Überlaufkasten (11) wieder seinen normalen Pegel (18) oberhalb des Verbindungspunkts (19) zwischen dem Überlaufkasten (11) und der zweiten Leitung (21) erreicht.

2. Einstellvorrichtung nach Anspruch 1, **dadurch gekennzeichnet, dass** die zweite Leitung (21), die den Überlaufkasten (11) mit dem Alkoholvorratsbehälter (2) verbindet, ein elastisches Rohr ist, das mit dem Kasten über ein starres Rohr (16), das im Wesentlichen parallel zur horizontalen Oberfläche des in dem Kasten (11) enthaltenen Lacks (10) verläuft, verbunden ist.

3. Einstellvorrichtung nach Anspruch 2, **dadurch gekennzeichnet, dass** das Rohr (16) nach oben geneigt ist, derart, dass ein wirksameres Aufsteigen von Luftblasen (3) vom Eingang des Rohrs (16) bis zum Alkoholvorratsbehälter (2) ermöglicht wird.

4. Einstellvorrichtung nach einem der Ansprüche 2 oder 3, **dadurch gekennzeichnet, dass** der Überlaufkasten (11) und das Rohr (16) aus einem nicht rostenden Metallwerkstoff verwirklicht sind.

5. Einstellvorrichtung nach einem der Ansprüche 2 bis 4, **dadurch gekennzeichnet, dass** der Innendurchmesser des starren Rohrs (16) des Überlaufkastens (11) im Bereich von 6 bis 8 Millimetern liegt.

6. Vorrichtung nach einem der Ansprüche 2 bis 5, **dadurch gekennzeichnet, dass** das starre Rohr (16) des Überlaufkastens (11) auf Höhe seiner Verbindung mit der Innenwand des Überlaufkastens (11) angefast ist, damit Luftblasen besser in das Rohr (16) eindringen können.

7. Vorrichtung nach einem der vorhergehenden Ansprüche, **dadurch gekennzeichnet, dass** der Alkoholvorratsbehälter (2) die Form einer nach unten orientierten Flasche besitzt und mit einem der Enden der zweiten Leitung (21) über seinen Einlassflaschenhals (20) verbunden ist.

8. Vorrichtung nach einem der vorhergehenden Ansprüche, **dadurch gekennzeichnet, dass** der Überlaufkasten (11) einen U-förmigen transversalen Querschnitt aufweist.
